# EUROPEAN PATENT SPECIFICATION

(11) **EP 0 715 127 B1**
(45) Date of publication and mention of the grant of the patent: **12.07.2000**
(21) Application number: 95830489.1
(22) Date of filing: 23.11.1995
(51) Int. Cl.: F24C 15/02, A21B 3/02

(54) **A ring seal for positioning between a hatch and hatch frame in steam ovens**
Dichtungsring zur Anordnung zwischen einer Klappe und einem Rahmen für Dampfofen
Joint annulair à disposer entre une trappe et son cadre pour four à vapeur

(30) Priority: 02.12.1994 IT MO940162
(43) Date of publication of application: 05.06.1996
(73) Proprietor: ANGELO PO GRANDI CUCINE S.p.A., 41012 Carpi (MO) (IT)
(72) Inventor: Culzoni, Marco, I-42015 Correggio (RE) (IT)
(74) Representative: Lanzoni, Luciano

(56) References cited:
- DE-C- 4 032 490
- US-A- 4 077 389
- US-A- 4 300 528
- US-A- 4 822 060

## Description

Ring seals are frequently used in steam ovens, that is, ovens wherein a certain amount of slightly pressurized steam is generated. The prior art teaches seals stably mounted on oven hatches.

This can cause the drawback of condensation dripping when the hatch is opened, which in a busy workplace can lead to safety problems (slippery floors).

Other realizations have the seal mounted entirely on hatch or the hatch frame, which resolves the problem of dripping on to the floor - a drip collection tray being placed below the frame - but is somewhat unhygienic as dirt tends to collect on the edge of the seal in contact with the hatch frame - a drawback which can in any case occur even where the seal is mounted on the hatch.

Wherever the seal is mounted, the dirt collects both when the oven is functioning, that is, with hatch closed, and when the hatch is open for removal of trays and ovenware.

The prior art also teaches a double seal, in other words a seal both on the hatch and the frame. This causes dirt both on the one and the other, doubling the problem outlined above, and also leads to infiltration of water into the base of the seals, leading to further hygiene difficulties, with dirt collecting under the seals.

In the US 4 077 389 there is described a gasket to be used in an oven door, said gasket being removably secured between the oven and the door.

To sum up, all the prior art realizations cause problems connected with cleaning operations, both with regard to the hatch and to the hatch frame. A further drawback derives from the deformations to which the hatch frame is subject, which renders a good seal result hard to obtain where the seal is situated on the hatch frame.

The present invention, as it is characterized in claim 1 that follow, aims to overcome the above-mentioned drawbacks by providing a seal ring placed between the hatch and the frame of the oven door, in particular in steam ovens, in which the seal organ is associated to means for dissociating same both from the hatch and the hatch frame when the oven door is open.

The invention shows a constructional simplicity and a facility of application, which requires no special operations on the door.

Further characteristics and advantages of the present invention will better emerge from the detailed description that follows, of some embodiments of the invention, illustrated in the form of non-limiting examples in the accompanying drawings, in which:
figure 1 shows a schematic vertical-elevation front view;
figure 2 is a schematic section according to line I-I of figure 1;
figure 3 is the section of figure 2 with the invention in a different operative configuration;
figure 4 shows two different operative configurations of a section of a second embodiment of the invention, the section being similar to that of figure 2;
figure 6 is an enlarged detail of a section made according to a line perpendicular to line I-I of figure 1, relating to a further embodiment;
figure 7 is a schematic section made according to line VI-VI of figure 6.

With reference to the figures, 1 denotes a frame of a hatch of a steam oven. The hatch 2 is hinged to the frame by means of a hinge 4. A seal ring is interpositioned between the frame 1 and the hatch 2, which seal ring comprises a seal 3 provided with a support frame 30 therefor. The seal 3 is shaped such as to surround the oven hatchway situated within the frame 1 and is provided with elastically deformable elements 31 fixed by one end thereof to the seal 3, or more precisely, to the support frame 30 of the seal 3.

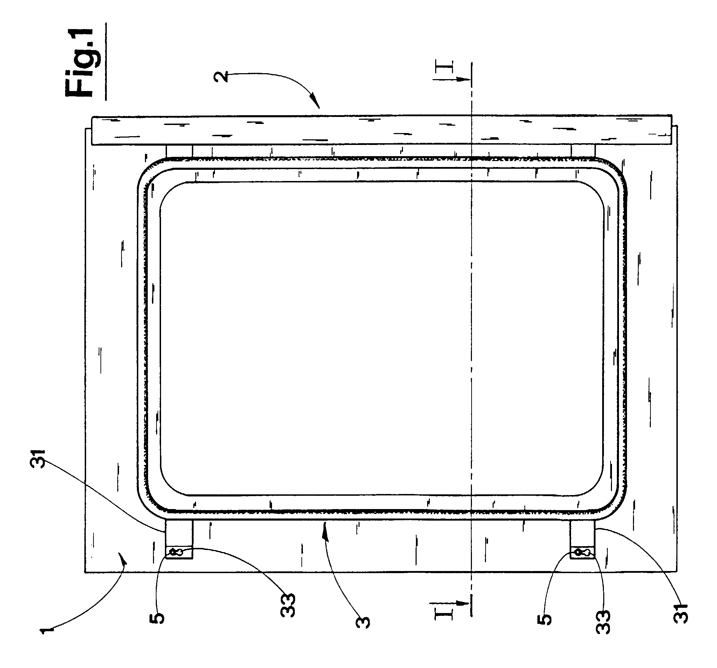

At another end the elements 31 are connected removably to the frame 1. This connection can be realized, as in the embodiment shown in figure 1, through a slot 33 made in each element 31 with a flathead pivot 5 fixed on the frame 1.

At the zone whereat the hinges 4 are situated, the connection of the seal 3 to the frame 1 is realized by means of elements 34 hinged to the frame 1.

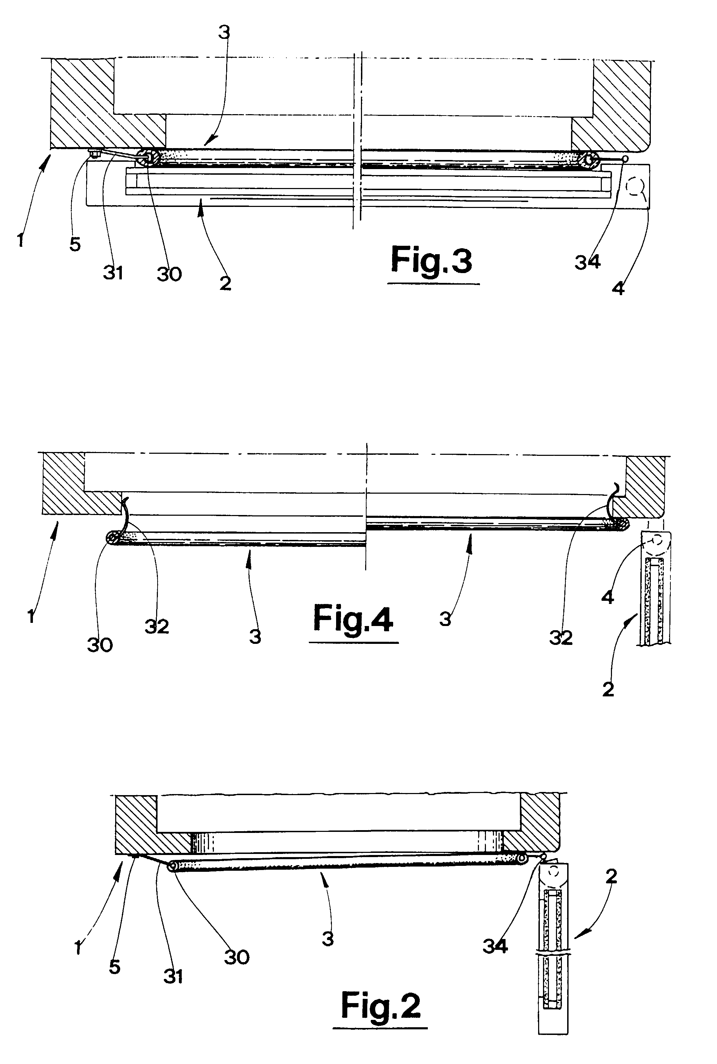

The elements 31 function as flexion springs which, when the hatch is open, assume their natural configuration, causing the seal 3 to distance from the surface of the frame 1. When the hatch is closed, as in figure 3, the seal 3 is compressed betwen the hatch 2 and the frame 1 and the elements 31 flex to allow the seal 3 to be brought into contact with the frame 1.

A second embodiment of the invention uses elastically deformable elements 32 constrained to the seal 3 such as to function as flexible anchors of said seal 3 to the internal walls of the frame 1. In particular, in figure 4 the functional characteristics of this anchor arrangement of the frame 1 to the seal 3 are shown, achieved by means of the elastically deformable elements 32. Figure 4 shows two operative positions: the distancing of the seal 3 from the frame 1 can be simply executed by pulling the elastically deformable elements 32 externalwise; the insertion of the seal 3 is achieved by pushing the element into the opening surrounded by the frame 1. Detachment and insertion operations of the seal 3 are made possible by the conformation and the elastic deformability of the elastically deformable elements 32, which interact with the internal walls of the frame 1.

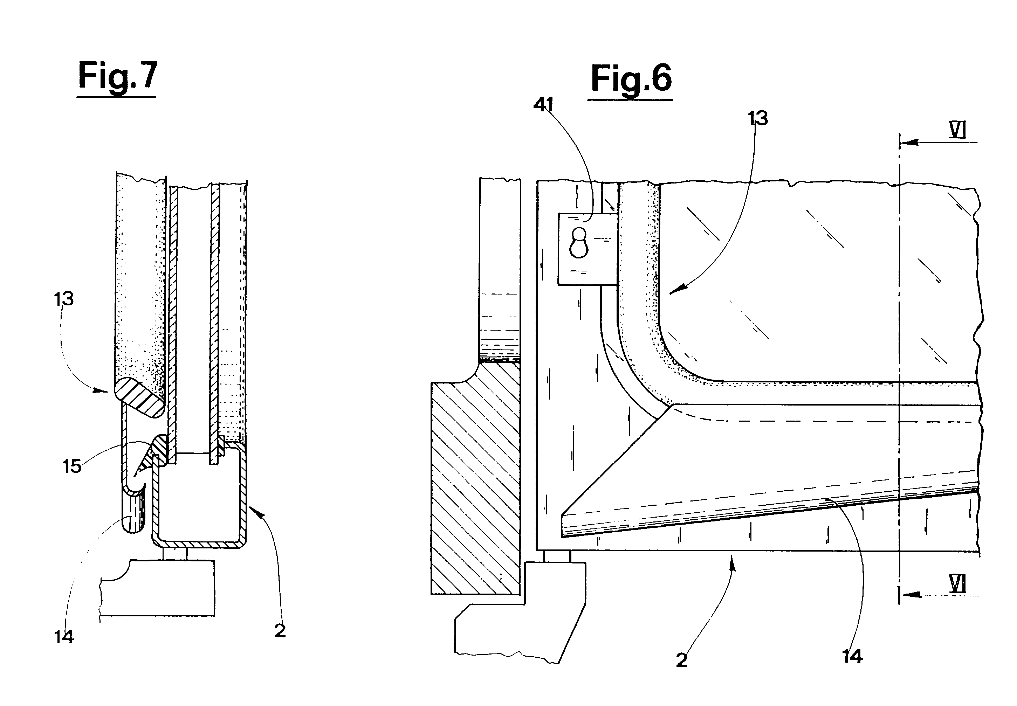

In the embodiment of figures 6 and 7 a seal 13 is shown connected to the hatch 2; the seal 13 is inferiorly provided with an inclined gutter 14 having the purpose of collecting the condensation drips that form on the internal side of the hatch 2. The drips of condensation are conducted into the gutter 14 by means of a drip rake 15.

The seal 13 is connected to the hatch 2 by means of elastically deformable elements 41 having first ends fixed to the seal 13 and second ends removably connected to the hatch 2, removably and having a type of connection which is substantially similar to the one illustrated in the embodiment of figure 1 between the elements 31 and the flathead pivots 5 fixed to the frame 1.

The gutter 14 is inclined so that the lower end thereof is positioned in proximity of the pivot 16 about which the hatch 2 is hinged to the frame 1.

The seal 3 can be conformed in various ways; in particular, it can exhibit a trapezoid shape with the lower side being inclined to a predetermined inclination which causes the drips of condensation to be conveyed to the hinging zone of the hatch 2.

The shape of the straight transversal section of the seal 3 is very simple, so that it can be more easily cleaned.

The fact that the seal 3 can be detached from both the frame 1 and the hatch 2 means that the seal 3 can easily adapt (when the hatch 2 is closed) to the facing walls of the frame 1 and the hatch 2.

This leads to a good seal. The fact that it can be distanced (when the hatch 2 is open) both from the frame 1 and the natch 2 means that easy access is afforded to the surfaces of the frame 1 and the hatch 2, so that the cleaning operation is easy, effective and rapid.

## Claims

1. A seal ring for placing between a hatch and a hatch frame, in particular for steam ovens, characterized in that it comprises at least one seal (3) (13) which is independent of said hatch (2) and said hatch frame (1), and which is associated to elastically deformable elements (31, 32) which, when the door is open, assume their natural configuration, causing the seal (3, 13) to distance from the surface of the frame (1); said seal (3) (13) being tightly compressed between said hatch (1) and said hatch frame (2) when said hatch (1) is closed.

2. A seal ring as in claim 1, characterized in that it comprises a first type of said elastically deformable elements (31) which are connected at first ends thereof to said seal (3); at least some of said first type of elastically deformable elements (31) being connected at second ends thereof to said hatch frame (1).

3. A seal ring as in claim 2, characterized in that said first type of elastically deformable elements (31) are removably connected by ends thereof to said frame (1).

4. A seal ring, as in claim 3, characterized in that said first type of elastically deformable elements (31) act as flexion springs.

5. A seal ring as in claim 1, characterized in that it comprises a second type of elastically deformable elements (32) which are fixed by and one thereof to said seal (3); at least some of said second type of elastically deformable elements (32) being shaped such as to contact with facing internal walls of said hatch frame (1); said second type of elastically deformable elements (32) constituting a removable anchoring system for said seal (3) on said hatch frame (1).

6. A seal ring as in claim 5, characterized in that said second type of elastically deformable elements (32) act as flexion springs.

7. A seal ring, as in claim 1, characterized in that said seal (3) is hinged at a superior side thereof to an upper side of said hatch frame (1).

8. A seal ring as in claim 1, characterized in that said seal (13) exhibits a trapezoid shape with an inferior side thereof having a predetermined inclination; drips of condensation from steam exiting said oven being entrained in said inferior side and removed towards a zone of said hatch (2) whereat hinges thereof are situated.

9. A seal ring as in claim 1, characterized in that said means for keeping said seal (13) independent comprise a third type of elastically deformable elements (41) connected by a first end thereof to said seal (13); at least some of said third type of elastically deformable elements (41) being connected by second ends thereof to said hatch (2).

10. A seal ring, as in claim 9, characterized in that said third type of elastically deformable elements (41) are removably connected by said second ends thereof to said hatch (2).

11. A seal ring, as in claim 10, characterized in that said seal (13) is inferiorly provided with an inclined gutter (14) conformed in such a way as to collect condensation drips which form on an internal side of said hatch (2); a drip rake (15) being provided, fixed to said internal side of said hatch (2), for guiding said drips into said inclined gutter (14).

12. A seal ring, as in claim 11, characterized in that said inclined gutter (14) is inclined at such an angle that a lower end thereof is situated in proximity of a pivot (16) about which said hatch (2) is hinged to said hatch frame (1).

## Patentansprüche

1. Dichtungsring zur Anordnung zwischen einer Klappe und einem Rahmen, insbesondere bei Dampföfen, **dadurch gekennzeichnet,** dass er wenigstens ein Dichtungselement (3), (13) enthält, welches unabhängig von der genannten Klappe (2) und dem genannten Rahmen (1) ist, und das elastisch verformbaren Elementen (31, 32) zugeordnet ist, welche, wenn die Klappe geöffnet ist, ihre natürliche Darstellung einnehmen und somit bewirken, dass das Dichtungselement (3, 13) einen Abstand von der Oberfläche des Rahmens (1) bekommt; wobei das genannte Dichtungselement (3, 13) fest zwischen der genannten Klappe (2) und dem genannten Rahmen (1) zusammengepresst wird, wenn die genannte Klappe (2) geschlossen ist.

2. Dichtungsring nach Patentanspruch 1, **dadurch gekennzeichnet,** dass er wenigstens einen ersten Typ der genannten verformbaren Elemente (31) enthält, welche mit ihren ersten Enden an dem genannten Dichtungselement (3) befestigt sind; wobei wenigstens einige der elastisch verformbaren Elemente (31) des genannten ersten Typs mit ihren zweiten Enden an dem genannten Rahmen (1) befestigt sind.

3. Dichtungsring nach Patentanspruch 2, **dadurch gekennzeichnet,** dass die elastisch verformbaren Elemente (31) des genannten ersten Typs mit ihren Enden lösbar an dem genannten Rahmen (1) befestigt sind.

4. Dichtungsring nach Patentanspruch 3, **dadurch gekennzeichnet,** dass die elastisch verformbaren Elemente (31) des genannten ersten Typs wie Biegungsfedern wirkt.

5. Dichtungsring nach Patentanspruch 1, **dadurch gekennzeichnet,** dass er einen zweiten Typ von elastisch verformbaren Elementen (32) enthält, welche durch und mit einem ihrem Ende an dem genannten Dichtungselement (3) befestigt sind; wobei wenigstens einige der elastisch verformbaren Elemente (32) des genannten zweiten Typs so geformt sind, dass sie mit den einander zugewandten internen Wänden des genannten Rahmens (1) im Kontakt sind; und wobei der genannte zweite Typ von elastisch verformbaren Elementen (32) ein lösbares Verankerungssystem für das genannte Dichtungselement (3) an dem genannten Rahmen (1) bildet.

6. Dichtungsring nach Patentanspruch 5, **dadurch gekennzeichnet,** dass die elastisch verformbaren Elemente (32) des genannten zweiten Typs wie Biegungsfedern wirkt.

7. Dichtungsring nach Patentanspruch 1, dadurch gekennzeichnet, dass das genannte Dichtungselement (3) mit seiner oberen Seite an die obere Seite des genannten Rahmens (1) angelenkt ist.

8. Dichtungsring nach Patentanspruch 1, **dadurch gekennzeichnet,** dass das genannte Dichtungselement (13) eine Trapezform aufweist, deren untere Seite mit einer bestimmten Schräge versehen ist; wobei die Kondenstropfen des aus dem genannten Ofen austretenden Dampfes zu der genannten unteren Seite geleitet und in Richtung eines Bereiches der genannten Klappe (2) entfernt werden, in welchem die Scharniere derselben angeordnet sind.

9. Dichtungsring nach Patentanspruch 1, **dadurch gekennzeichnet,** dass die genannten Mittel, welche das genannte Dichtungselement (13) unabhängig halten, einen dritten Typ von elastisch verformbaren Elementen (41) enthalten, die mit einem ersten Ende an dem genannten Dichtungselement (13) befestigt sind; wobei wenigstens einige der elastisch verformbaren Elemente (41) des genannten dritten Typs mit ihren zweiten Enden an der genannten Klappe (2) befestigt sind.

10. Dichtungsring nach Patentanspruch 9, **dadurch gekennzeichnet,** dass die elastisch verformbaren Elemente (41) des genannten dritten Typs mit ihren genannten zweiten Enden lösbar an der genannten Klappe (2) befestigt sind.

11. Dichtungsring nach Patentanspruch 10, **dadurch gekennzeichnet,** dass das genannte Dichtungselement (13) unten mit einer geneigten Abflussrinne (14) versehen ist, letztere auf solche Weise ausgebildet, dass sie die sich an der Innenseite der genannten Klappe (2) bildenden Kondenstropfen auffängt; wobei ein Tropfenleitblech (15) vorgesehen ist, angebracht an der genannten Innenseite der genannten Klappe (2), um die genannten Tropfen in die genannte geneigte Abflussrinne (14) zu leiten.

12. Dichtungsring nach Patentanspruch 11, **dadurch gekennzeichnet,** dass die genannte geneigte Abflussrinne (14) in einem solchen Winkel geneigt ist, dass sich ihr tiefer liegendes Ende in der Nähe eines Zapfens (16) angeordnet befindet, um welchen die genannte Klappe (2) an den genannten Rahmen (1) angelenkt ist.

## Revendications

1. Un joint annulaire à disposer entre une trappe et son cadre, en particulier pour des fours à vapeur, caractérisé en ce qu'il comprend au moins un joint (3, 13) indépendant de ladite trappe (2) et dudit cadre (1) et étant associé à des éléments élastiquement déformables (31, 32) qui, lorsque la trappe est ouverte, restent dans leur configuration naturelle, en maintenant le joint à une certaine distance de la surface du cadre; ledit joint (3, 13) étant fortement compressé entre ladite trappe (1) et ledit cadre (2) lorsque ladite trappe est fermée.

2. Un joint annulaire selon la revendication 1, caractérisé en ce qu'il comprend un premier type d'éléments élastiquement déformables (31) reliés par leurs premières extrémités audit joint (3); au moins quelques-uns desdits premiers types d'élémentsélastiquement déformables (31) étant reliés par leurs secondes extrémités audit cadre (1).

3. Un joint annulaire selon la revendication 2, caractérisé en ce que lesdits premiers types d'éléments élastiquement déformables (31) sont reliés de manière amovible par leurs extrémités audit cadre (1).

4. Un joint annulaire selon la revendication 3, caractérisé en ce que ledit premier type d'éléments élastiquement déformables (31) agissent comme des ressorts à flexion.

5. Un joint annulaire selon la revendication 1, caractérisé en ce qu'il comprend un second typed éléments élastiquement déformables (32) fixés en une de leurs extrémités sur ledit joint (3); au moins l'un desdits éléments élastiquement déformables (32) étant conformé de manière à entrer en contact avec les parois internes se faisant face dudit cadre (1); ledit second type d'éléments élastiquement déformables (32) constituant un système d'ancrage amovible pour ledit joint (3) sur ledit cadre (1).

6. Un joint annulaire selon la revendication 5, caractérisé en ce que le second type d'éléments élastiquement déformables (32) agissent comme des ressorts à flexion.

7. Un joint annulaire selon la revendication 1, caractérisé en ce que ledit joint (3) est accroché, en correspondance de son côté supérieur, au côté supérieur dudit cadre (1).

8. Un joint annulaire selon la revendication 1, caractérisé en ce que ledit joint (13) présente une forme trapezoïdale avec un côté inférieur ayant une inclinaison prédéterminée; les gouttes de condensation de la vapeur sortant du four étant convoyées sur ledit côté inférieur et éliminées au travers d'une zone de fixation de ladite trappe (2).

9. Un joint annulaire selon la revendication 1, caractérisé en ce que lesdits moyens pour permettre audit joint (13) de rester indépendant comprennent un troisième type d'éléments élastiquement déformables (41) reliés par une de leurs extrémités audit joint (13); au moins quelques-uns desdits éléments élastiquement déformables étant reliés par leur autre extrémité à ladite trappe (2).

10. Un joint annulaire selon la revendication 9, caractérisé en ce que le troisième type d'éléments élastiquement déformables (41 ) sont reliés de manière amovible par leur seconde extrémité à ladite trappe (2).

11. Un joint annulaire selon la revendication 10, caractérisé en ce que ledit joint (13) est inférieurement pourvu d'une gouttière inclinée (14) conformée de manière à reccueillir les gouttes de condensation qui se forment sur un côté interne de ladite trappe (2); une paroi (15) étant prévue, fixée sur ledit côté interne de ladite trappe (2), pour guider lesdites gouttes dans ladite gouttière (14).

12. Un joint annulaire selon la revendication 11, caractérisé en ce que ladite gouttière (14) est inclinée selon un angle tel que son extrémité inférieure soit située à proximité d'un pivot (16) réalisant l'accrochage entre ladite trappe (2) et ledit cadre (1).
